# EUROPÄISCHE PATENTSCHRIFT

(11) **EP 3 694 623 B1**
(45) Veröffentlichungstag und Bekanntmachung des Hinweises auf die Patenterteilung: **10.01.2024**
(21) Anmeldenummer: 18804594.2
(22) Anmeldetag: 16.11.2018
(51) Int. Cl.: B01D 29/11, B01D 29/54, B01D 29/68

(54) **FILTERVORRICHTUNG**
FILTER DEVICE
SYSTÈME DE FILTRE

(30) Priorität: 05.12.2017 DE 102017011221
(43) Veröffentlichungstag der Anmeldung: 19.08.2020
(73) Patentinhaber: Hydac Process Technology GmbH, 66538 Neunkirchen (DE)
(72) Erfinder: SCHLICHTER, Bernhard, 66123 Saarbrücken (DE); GERSTNER, Jörg Hermann, 66346 Püttlingen (DE); KAINTS, Albert, 66583 Spiesen-Elversberg (DE)
(74) Vertreter: Bartels und Partner, Patentanwälte
(86) Internationale Anmeldenummer: PCT/EP2018/081575
(87) Internationale Veröffentlichungsnummer: WO 2019/110279

(56) Entgegenhaltungen:
- EP-A1- 1 374 965
- CN-B- 105 536 331
- CN-Y- 2 464 423
- DE-A1- 2 327 532
- DE-A1- 3 443 752

## Beschreibung

Die Erfindung betrifft eine Filtervorrichtung mit den Merkmalen im Oberbegriff von Anspruch 1.

Filtervorrichtungen dieser Art sind Stand der Technik, siehe beispielsweise DE 20 2011 000 268 U. Die Möglichkeit der Abreinigung von Filtereinsätzen durch Rückspülen erlaubt bei diesen Filtervorrichtungen längere Laufzeiten zwischen dem Wechsel von Filtereinsätzen. Dadurch lassen sich Wartungskosten verringern und häufige Betriebsunterbrechungen vermeiden. In Verbindung mit intelligenten Filtersteuerungen lassen sich die Filtervorrichtungen im Automatikbetrieb so betreiben, dass ein Rückspülvorgang eingeleitet wird, wenn aufgrund von Schmutzanlagerung am Filter der Differenzdruck Δp einen vorgewählten Grenzwert erreicht, bei dem eine Abreinigung erforderlich ist. Wenn derartige Filtervorrichtungen für Anwendungen zum Einsatz kommen, bei denen es zu zeitlich begrenzten Schmutzschüben kommen kann, wie dies beispielsweise bei maritimen Einsätzen, wie Ballastwasseranwendungen, möglich ist, bei denen es z.B. durch Sedimentaufwirbelung in Hafenbecken zu extremen Schmutzkonzentrationen im Zulauf kommen kann, ergeben sich bei den bekannten Filtervorrichtungen Schwierigkeiten. Bei derartigen Anwendungen ist es aus Kostengründen und wegen der hierbei erforderlichen Baugrößen nicht praktikabel, die Filtervorrichtung auf den ungünstigsten Fall, d.h. auf extreme Schmutzschübe, sog. TSS-Peaks (total suspended solids), auszulegen. Die Prozesssicherheit und Anlagenverfügbarkeit lässt daher bei den bekannten Filtervorrichtungen zu wünschen übrig.

Die DE 34 43 752 A1 beschreibt eine Filtervorrichtung, mit einem Filtergehäuse mit einem Fluideinlass für Unfiltrat und mit einem Fluidauslass für Filtrat und mit mindestens einem im Filtergehäuse aufgenommenen ein- oder mehrteiligen Filtereinsatz, der mit einer Rückspüleinrichtung mit mindestens einem Rückspülorgan im Gegenstrom zur Filterrichtung abreinigbar ist, die mittels einer fluidführenden Antriebswelle eines Drehantriebes entlang der Innenseite des jeweiligen Filtereinsatzes verfahrbar ist, wobei das jeweilige Rückspülorgan an seinem dieser Innenseite benachbarten Ende mindestens eine spaltförmige Durchtrittsöffnung aufweist, die parallel zur Drehachse der Antriebswelle verläuft und die in einen mit der Antriebswelle fluidführend verbundenen Strömungsraum einmündet, wobei mindestens eine weitere Rückspüleinrichtung mit mindestens einem weiteren Rückspülorgan vorhanden ist, wobei die fluidführende Antriebswelle in voneinander separierte Kammern unterteilt ist und wobei das jeweils eine Rückspülorgan der einen Rückspüleinrichtung an eine der Kammern angeschlossen ist und das jeweils andere Rückspülorgan der anderen Rückspüleinrichtung an eine andere Kammer angeschlossen ist, wobei die Antriebswelle auf einer ihrer Endseiten eine Kupplungsstelle für den Angriff eines Antriebsmotors aufweist, wobei das obere Ende der Antriebswelle in einem am Deckelteil befindlichen Drehlager gelagert ist, und wobei sich die Antriebswelle mit einem Wellenzapfen durch das Drehlager in einem auf dem Deckelteil befindlichen Aufsatz erstreckt.

Weitere Filtervorrichtungen gehen aus der CN 105 536 331 B, der DE 23 27 532, der CN 2 464 423 Y und der EP 1 374 965 A1 hervor.

Im Hinblick auf diese Problematik liegt der Erfindung die Aufgabe zugrunde, eine Filtervorrichtung der eingangs genannten Gattung zur Verfügung zu stellen, die bei Anwendungen, bei denen mit extremen Schmutzschüben zu rechnen ist, eine hohe Betriebssicherheit bei kompaktem Aufbau gewährleistet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass der Wellenzapfen der Antriebswelle als Kupplungsstelle in der Art eines Hohlzapfens ausgebildet ist; dass der Wellenzapfen eine obere Durchlassöffnung als Ausgang aus dem Innenraum der Antriebswelle und seitliche, fensterartige Wanddurchbrüche für die Fluidverbindung zum Innenraum des Aufsatzes und damit zu einer Spülleitung aufweist; und dass im Wellenzapfen ein Kupplungsschlitz gebildet ist, in den ein Mitnehmer der Ausgangswelle eines elektrischen Getriebemotors eingreift, der auf der Oberseite des Aufsatzes angeordnet ist.

Es ist ferner vorgesehen, dass mindestens eine weitere Rückspüleinrichtung mit mindestens einem weiteren Rückspülorgan vorhanden ist, dass die fluidführende Antriebswelle in voneinander separierte Kammern unterteilt ist und dass das jeweils eine Rückspülorgan der einen Rückspüleinrichtung an eine der Kammern angeschlossen ist und das jeweils andere Rückspülorgan der anderen Rückspüleinrichtung an eine andere Kammer angeschlossen ist. Dadurch, dass für den jeweiligen Filtereinsatz mindestens eine zusätzliche Rückspüleinrichtung vorgesehen ist, lässt sich bei der Filtervorrichtung die Effizienz der Rückspülung in flexibler Weise den Anforderungen bei unterschiedlichen Schmutzkonzentrationen im Filterzulauf anpassen. Das Zuschalten der zweiten Rückspüleinrichtung beschleunigt den Schmutzaustrag um 100 % im Vergleich zum bekannten Betrieb mit einer Rückspüleinrichtung pro Filtereinsatz, so dass auch extreme Schmutzschübe (TSS-Peaks) beherrschbar sind.

In vorteilhafter Weise kann die Filtervorrichtung beispielsweise so betrieben werden, dass im Normalbetrieb durch Freigabe nur einer der Kammern über ein Spülventil nur eine Rückspüleinrichtung für ein Rückspülintervall betrieben wird, so lange der zeitliche Δp-Anstieg am Filter innerhalb eines vorgewählten Grenzwertes liegt. Beschleunigt sich der Differenzdruckanstieg, so wird diese eine Rückspüleinrichtung in Dauerbetrieb versetzt. Wenn bei diesem Betriebszustand ein Schmutzschub erfolgt, wird die zweite Rückspüleinrichtung durch Öffnen des Rückspülventils der zweiten Kammer zugeschaltet, bis der Differenzdruck auf den gewünschten Wert absinkt, wonach die zweite Rückspüleinrichtung wieder abgeschaltet wird. Die Dauerspülung mit der ersten Rückspüleinrichtung wird vorzugsweise für eine vorgewählte Zeit noch beibehalten, bis der Zustand der Normalbelastung detektiert ist. Die Filtervorrichtung ermöglicht auf diese Weise eine effizientere Nutzung der Siebfläche bei hohen TSS-Massenströmen. Bei kleineren Filterbaugrößen sind dadurch höhere TSS-Peaks prozesssicher beherrschbar.

Mit Vorteil sind die eingesetzten Rückspüleinrichtungen diametral einander gegenüberliegend zur Drehachse der Antriebswelle angeordnet.

Es können mehr als zwei Rückspülorgane eingesetzt sein, die in Gruppen unterteilt der jeweils einen und der weiteren Rückspüleinrichtung zugeordnet sind. Mit besonderem Vorteil kann hierbei eine Gruppe von mindestens zwei Rückspülorganen in vertikaler Übereinanderanordnung parallel zur Drehachse der Antriebswelle eine Rückspüleinrichtung bilden.

Die Anordnung kann mit Vorteil derart getroffen sein, dass die Antriebswelle entlang ihrer Drehachse in zwei Kammern unterteilt ist, wobei die Rückspülorgane der einen Rückspüleinrichtung in die eine Kammer und die Rückspülorgane der anderen Rückspüleinrichtung in die andere Kammer münden.

Für die Verbindung der Kammern mit ihren zugehörigen Rückspülventilen kann die Antriebswelle auf ihren einander gegenüberliegenden Endseiten Durchlassöffnungen für die Abfuhr von Rückspülfluid der einen bzw. der anderen Rückspüleinrichtung aufweisen.

Bei vorteilhaften Ausführungsbeispielen sind zwei vertikal übereinanderliegende Filtereinsätze vorgesehen, die jeder zwei Rückspüleinrichtungen aufweist, wobei bei beiden Filtereinsätzen die Rückspülorgane der einen Rückspüleinrichtung in eine Kammer und die Rückspülorgane der anderen Rückspüleinrichtung in eine andere Kammer münden.

Bei besonders vorteilhaften Ausführungsbeispielen ist bei zwei übereinanderliegenden Filtereinsätzen die Antriebswelle quer zur Drehachse in zwei weitere Kammern unterteilt, wobei bei jedem Filtereinsatz die Rückspülorgane der einen Rückspüleinrichtung über je eine zugehörige Kammer mit der einen Durchlassöffnung und die Rückspülorgane der anderen Rückspüleinrichtung über je eine weitere Kammer mit der anderen Durchlassöffnung in Verbindung sind. Beim Betrieb beider Rückspüleinrichtungen beider Filtereinsätze strömen dadurch an jeder Durchlassöffnung der Antriebswelle die Rückspülmengen von zwei axial zueinander versetzten Rückspüleinrichtungen ab. Dies führt zu einer Kompensation der an der Antriebswelle wirkenden Strömungskräfte und zu einer Verringerung der mechanischen Belastung.

Die Abfuhr von Rückspülfluid über die Durchlassöffnungen der Antriebswelle ist mittels Spülventilen ansteuerbar, die in bekannter Weise von der zugehörigen Filtersteuerung betätigbar sind.

Mit besonderem Vorteil sind die Rückspülorgane abstandsfrei auf der Innenseite des jeweils zuordenbaren Filtereinsatzes entlang derselben geführt.

Gemäß dem Patentanspruch 11 ist Gegenstand der Erfindung auch ein Verfahren unter Verwendung einer Filtervorrichtung nach einem der Patentansprüche 1 bis 10.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispiels der Filtervorrichtung;
- Fig. 2: einen Vertikalschnitt des Ausführungsbeispiels der Filtervorrichtung, wobei die Schnittebene bereichsweise aus der Zeichnungsebene verschoben ist;
- Fig. 3: einen zentralen Vertikalschnitt des Ausführungsbeispiels der Filtervorrichtung;
- Fig. 4: eine perspektivische Schrägansicht, wobei das Ausführungsbeispiel mit zentraler Schnittebene vertikal aufgeschnitten dargestellt ist; und
- Fig. 5: eine perspektivische Schrägansicht der gesondert dargestellten Antriebswelle für ein zweites Ausführungsbeispiel der Filtervorrichtung, wobei Außenwandbereiche zur Verdeutlichung der Bauweise durchsichtig dargestellt sind.

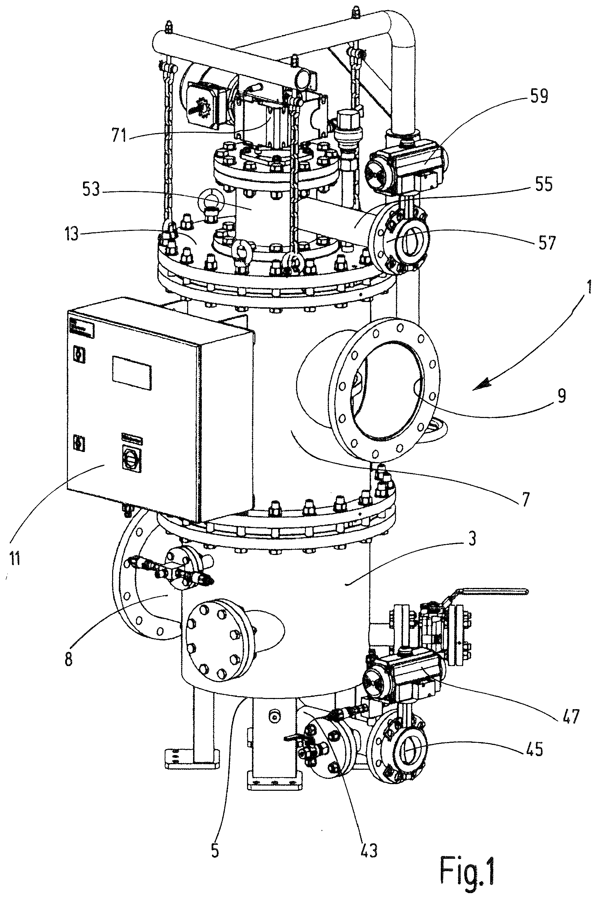

In den Fig. 1 bis 4, die ein Ausführungsbeispiel der Filtervorrichtung als Ganzes darstellen, ist ein Filtergehäuse als Ganzes mit 1 bezeichnet. Das zweiteilige Filtergehäuse 1 weist ein kreiszylinderförmiges Eingangsteil 3 mit geschlossenem Boden 5 auf. Auf dem Eingangsteil 3 ist ein Gehäusehauptteil 7 angeordnet, das wie das Eingangsteil 3 kreiszylinderförmig ist. Für den Zustrom von Unfiltrat in das Eingangsteil 3 ist an dessen Seitenwand ein Fluideinlass 8 vorgesehen, und an der Seitenwand des Hauptteils 7 befindet sich ein Fluidauslass 9 für Filtrat. Wie die Fig. 1 zeigt, ist an der Außenseite des Hauptteils 7 ein Schaltkasten 11 angebracht, der unter anderem eine dem Stand der Technik entsprechende elektronische Filtersteuerung enthält. An der Oberseite ist das Hauptteil 7 durch ein Deckelteil 13 abgeschlossen. Im Hauptteil 7 sind ein unterer Filtereinsatz 15 und ein oberer Filtereinsatz 17 aufgenommen, deren Filtersieb 19 bzw. 21 beim Filtriervorgang von innen nach außen hin durchströmt ist. Der Unfiltratzustrom zum Innenraum der Filtereinsätze 15, 17 erfolgt vom Eingangsteil 3 her über ein Vorfilter 23, der bei maritimem Einsatz als sog. Fischsieb vorgesehen ist.

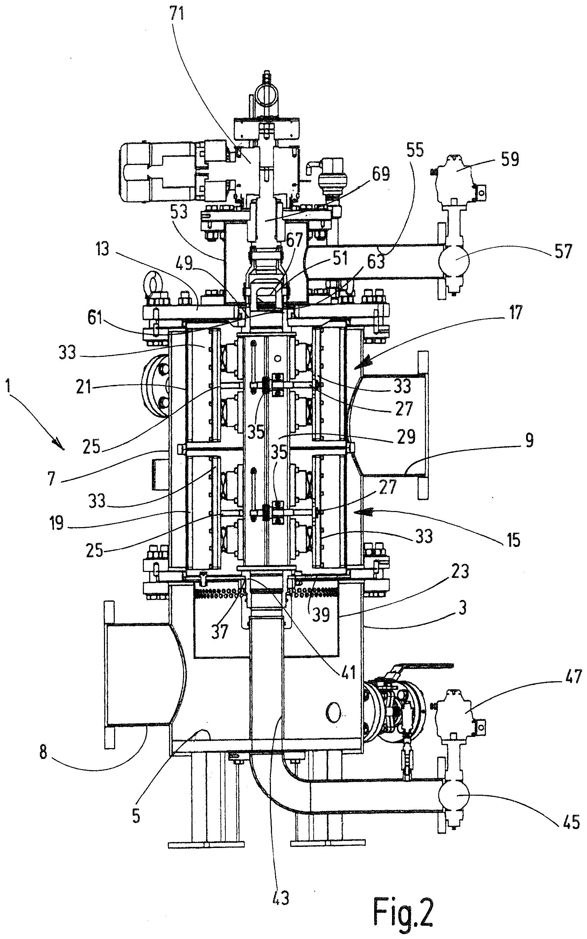

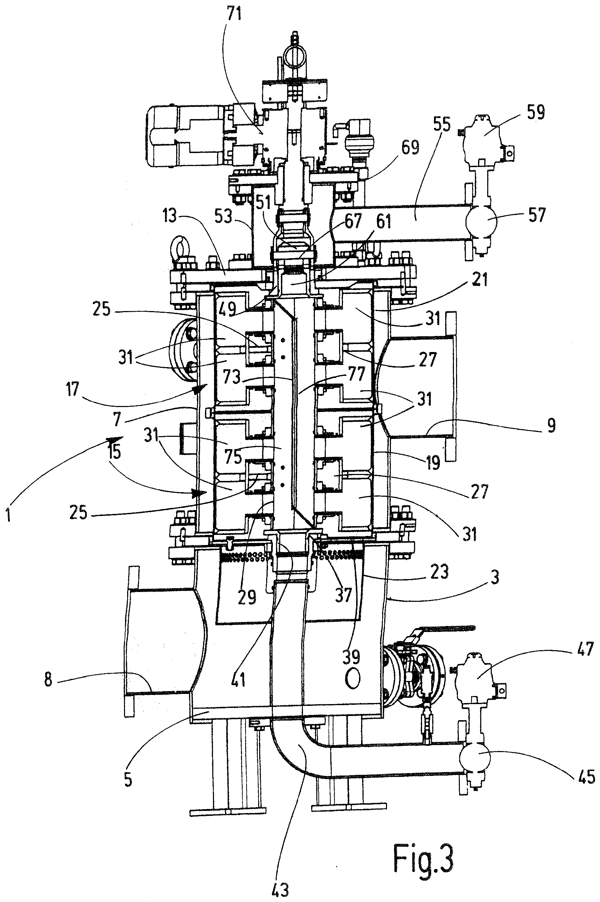

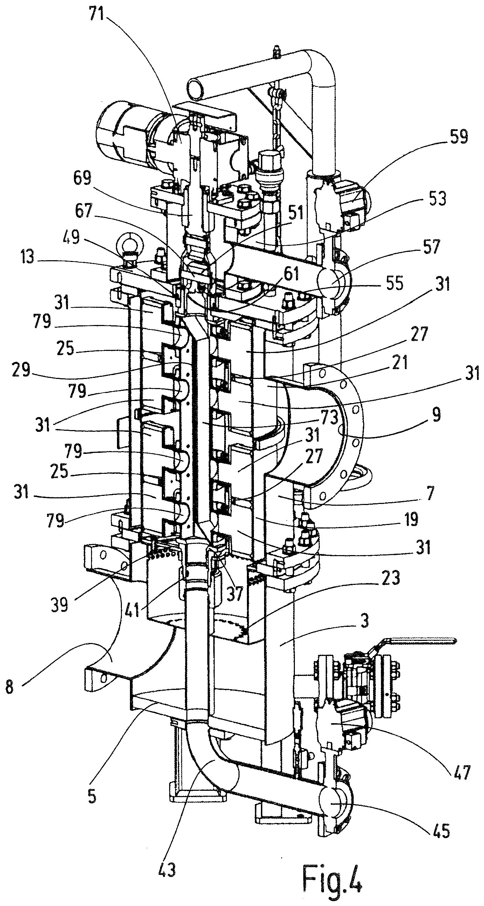

Für eine Abreinigung von Anlagerungen am Filtersieb 19, 21 vom unteren bzw. oberen Filtereinsatz 15 bzw. 17 weist jeder Filtereinsatz 15, 17 eine erste Rückspüleinrichtung 25 und eine zweite Rückspüleinrichtung 27 auf, die jeweils diametral einander gegenüberliegend an einer Antriebswelle 29 angebracht sind, die durch eine Hohlwelle gebildet ist, die in dem sich durch die Filtereinsätze 15, 17 erstreckenden Abschnitt einen rechteckigen Querschnitt besitzt. Wie die Fig. 3 und 4 zeigen, weisen die Rückspüleinrichtungen 25 und 27 der Filtereinsätze 15, 17 jeweils zwei Rückspülorgane 31 auf, die paarweise übereinanderliegend angeordnet sind und jedes Paar, wie in Fig. 2 gezeigt ist, an einem gemeinsamen Träger 33 gehalten sind. Mittels einer Einstelleinrichtung 35 (Fig. 2) sind die Träger 33 relativ zur Antriebswelle 29 derart lageeinstellbar, dass die Rückspülorgane 31 mit ihrer Außenseite, an der sich wie üblich ein Rückspül-Eingangsschlitz befindet, bei der Drehbewegung der Antriebswelle 29 abstandsfrei an der Innenseite des betreffenden Filtersiebes 19, 21 geführt sind. Die einen Spindeltrieb aufweisenden Einstelleinrichtungen 35 können in der Weise, wie es beispielsweise in den Fig. 1 bis 3 einer einen nachveröffentlichten Stand der Technik zeigenden Anmeldung DE 10 2017 002 646.7 offenbart ist, derart ausgebildet sein, dass durch die Einstelleinrichtung 35 für die Träger 33 eine radial äußere Endstellung vorgegeben ist, aus der sie gegen Federkraft radial einwärts bewegbar sind.

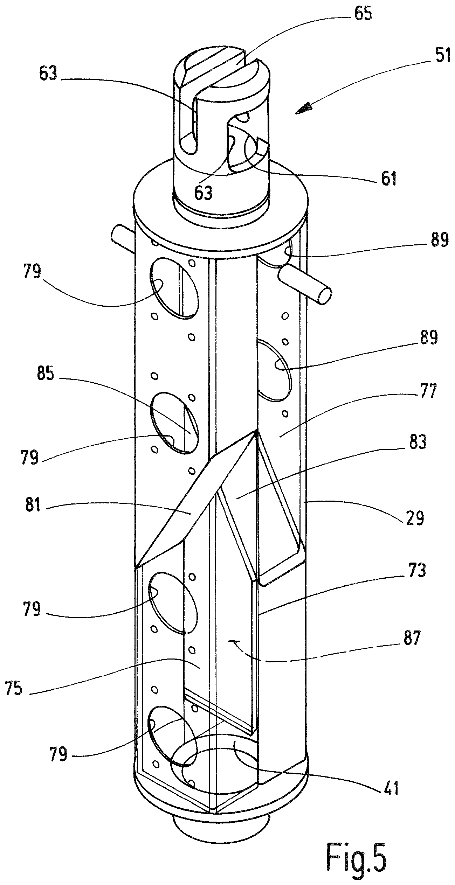

Die Antriebswelle 29 ist an ihrem unteren Ende in einem Drehlager 37 gelagert, das an Tragholmen 39 gehalten ist, die sich am Übergang vom Eingangsteil 3 zum Hauptteil 7 in Radialrichtung erstrecken. Am Drehlager 37 geht der Innenraum der hohlen Antriebswelle 29 mit einer Durchlassöffnung 41 in eine Spülleitung 43 über, die durch den Boden 5 des Eingangsteils 3 hindurch zu einem Spülventil 45 führt, das durch einen elektrischen Stellmotor 47 betätigbar ist. Das obere Ende der Antriebswelle 29 ist in einem am Deckelteil 13 befindlichen Drehlager 49 gelagert, wobei sich die Antriebswelle 29 mit einem Wellenzapfen 51 durch das Drehlager 49 in einem auf dem Deckelteil 13 befindlichen Aufsatz 53 erstreckt. Über eine zweite Spülleitung 55 ist der Innenraum des Aufsatzes 53 über eine zweite Spülleitung 55 mit einem zweiten Spülventil 57 in Verbindung, das durch einen elektrischen Stellmotor 59 betätigbar ist. Der Wellenzapfen 51 der Antriebswelle 29 ist in der Art eines Hohlzapfens in der Weise ausgebildet, wie es in Fig. 5 am Beispiel der für ein zweites Ausführungsbeispiel vorgesehenen Antriebswelle 29 dargestellt ist. Wie gezeigt, weist der Zapfen 51 eine obere Durchlassöffnung 61 als Ausgang aus dem Innenraum der Antriebswelle 29 auf, sowie seitliche, fensterartige Wanddurchbrüche 63 für die Fluidverbindung zum Innenraum des Aufsatzes 53 und damit zur Spülleitung 55. Des Weiteren ist im Zapfen 51 ein Kupplungsschlitz 65 gebildet, in den ein Mitnehmer 67 der Ausgangswelle 69 eines elektrischen Getriebemotors 71 eingreift, der auf der Oberseite des Aufsatzes 53 angeordnet ist.

Wie die Fig. 3 und 4 zeigen, ist beim ersten Ausführungsbeispiel die Antriebswelle 29 durch eine Trennwand 73, die sich über einen Großteil der Länge der Antriebswelle 29 zwischen den Durchlassöffnungen 41 und 61 entlang der Drehachse erstreckt, in zwei Kammern 75 und 77 geteilt, von denen die Kammer 75 mit der unteren Durchlassöffnung 41 und die andere Kammer 77 mit der oberen Durchlassöffnung 61 in Verbindung sind. Bei jedem Filtereinsatz 15 und 17 sind die Strömungskanäle, von denen lediglich in Fig. 4 einige beziffert und mit 79 bezeichnet sind, des in der Zeichnung jeweils linksseitig gelegenen Paares der Rückspülorgane 31, mit der Kammer 75 in Verbindung, während die Rückspülorgane 31 der rechtsseitig gelegenen Paare jeweils mit der anderen Kammer 77 in Verbindung sind. Bei Öffnen des Rückspülventils 45 an der ersten Spülleitung 43, die über die Durchlassöffnung 41 mit der Kammer 75 in Verbindung ist, erfolgt daher ein Rückspülvorgang lediglich mit der in der Zeichnung linksseitig gelegenen Rückspüleinrichtung 25 der Filtereinsätze 15, 17. Wird bei geschlossenem ersten Spülventil 45 das zweite Spülventil 57 geöffnet, dann findet der Rückspülvorgang lediglich mit den in der Zeichnung rechtsseitig gelegenen Rückspüleinrichtungen 27 statt, die über die zweite Kammer 77, die obere Durchlassöffnung 61 und die Rückspülleitung 55 mit dem zweiten Spülventil 57 in Verbindung sind. Sind für eine Sonder-Rückspülung beide Spülventile 45 und 57 geöffnet, erfolgt die Rückspülung mittels beider Rückspüleinrichtungen 25 und 27 beider Filtereinsätze 15 und 17.

Die Filtervorrichtung ist daher derart betreibbar, dass bei normalen Betriebszuständen, bei denen der zeitliche Einstieg der Druckdifferenz Δp am Filter moderat bleibt, lediglich eine der Rückspüleinrichtungen 25 oder 27 in Betrieb gesetzt wird, um den Anstieg der Druckdifferenz wieder zu kompensieren. Gegebenenfalls bleibt hierbei die jeweilige eine Rückspüleinrichtung 25 oder 27 im Dauerbetrieb. Kommt es zu einer extremen Schmutzkonzentration im Zulauf, beispielsweise durch Auftreten eines TSS-Peaks, wird durch Öffnen des jeweils weiteren Spülventils 45 oder 57 die jeweils zweite Rückspüleinrichtung 25 oder 27 der Filtereinsätze 15, 17 zugeschaltet. Sinkt der Differenzdruck während des Rückspülens mit beiden Spüleinrichtungen 25 und 27 wieder auf den Normalwert, dann wird eine Rückspüleinrichtung 25 oder 27 wieder abgeschaltet, während die Dauerspülung mit noch einer Rückspüleinrichtung 25 oder 27 für eine vorgewählte Zeit beibehalten werden kann.

Die Fig. 5 zeigt die Bauweise der Antriebswelle 29 für ein zweites Ausführungsbeispiel der Filtervorrichtung. Wie gezeigt, ist der Innenraum der Antriebswelle 29 durch zwei zur Drehachse schräg verlaufende, weitere Trennwände 81 und 83 in zwei zusätzliche Kammern 85 und 87 unterteilt, von denen die Kammer 85 mit der oberen Durchlassöffnung 61 und die andere Kammer 87 mit der unteren Durchlassöffnung 41 in Verbindung ist. Während beim ersten Ausführungsbeispiel die Strömungskanäle 79 die Rückspüleinrichtungen 25 beider Filtereinsätze 15 und 17 mit der unteren Durchlassöffnung 41 verbinden, sind bei der Bauweise von Fig. 5 lediglich die Strömungskanäle 79 der Rückspülorgane 31 des unteren Filtereinsatzes 15 mit der Durchlassöffnung 41 verbunden, während die Strömungskanäle 79 der Rückspüleinrichtung 25 des oberen Filtereinsatzes 17 mit der oberen Durchlassöffnung 61 in Verbindung sind. Mit dieser sind auch Strömungskanäle 89 der zweiten Rückspüleinrichtung 27 des oberen Filtereinsatzes 17, wie beim ersten Ausführungsbeispiel, in Verbindung, während die Fluidkanäle der zweiten Rückspüleinrichtung 27 des unteren Filtereinsatzes 15 mit der unteren Durchlassöffnung 41 in Verbindung sind, wie dies auch beim ersten Ausführungsbeispiel der Fall ist. Bei dieser Anordnung ergeben sich bei gleichzeitigem Betrieb beider Rückspüleinrichtungen 25 und 27 im Vergleich zum ersten Ausführungsbeispiel Strömungskräfte, die an der Antriebswelle 29 an gleichmäßiger verteilten Stellen angreifen, so dass die Antriebswelle 29 im Betrieb geringerer mechanischer Belastung ausgesetzt ist.

## Patentansprüche

1. Filtervorrichtung, mit einem Filtergehäuse (1) mit einem Fluideinlass (8) für Unfiltrat und mit einem Fluidauslass (9) für Filtrat und mit mindestens einem im Filtergehäuse (1) aufgenommenen ein- oder mehrteiligen Filtereinsatz (15, 17), der mit einer Rückspüleinrichtung (25) mit mindestens einem Rückspülorgan (31) im Gegenstrom zur Filterrichtung abreinigbar ist, die mittels einer fluidführenden Antriebswelle (29) eines Drehantriebes (69, 71) entlang der Innenseite des jeweiligen Filtereinsatzes (15, 17) verfahrbar ist, wobei das jeweilige Rückspülorgan (31) an seinem dieser Innenseite benachbarten Ende mindestens eine spaltförmige Durchtrittsöffnung aufweist, die parallel zur Drehachse der Antriebswelle (29) verläuft und die in einen mit der Antriebswelle (29) fluidführend verbundenen Strömungsraum einmündet, wobei mindestens eine weitere Rückspüleinrichtung (27) mit mindestens einem weiteren Rückspülorgan (31) vorhanden ist, wobei die fluidführende Antriebswelle (29) in voneinander separierte Kammern (73, 75) unterteilt ist und wobei das jeweils eine Rückspülorgan (31) der einen Rückspüleinrichtung (25) an eine der Kammern (73, 75) angeschlossen ist und das jeweils andere Rückspülorgan (31) der anderen Rückspüleinrichtung (27) an eine andere Kammer (73, 75) angeschlossen ist,
wobei die Antriebswelle (29) auf ihrer oberen Endseite eine Kupplungsstelle (51, 65) für den Angriff eines Antriebsmotors (71) aufweist,
wobei das obere Ende der Antriebswelle (29) in einem am Deckelteil (13) befindlichen Drehlager (49) gelagert ist, und
wobei sich die Antriebswelle (29) mit einem Wellenzapfen (51) durch das Drehlager (49) in einen auf dem Deckelteil (13) befindlichen Aufsatz (53) erstreckt,
**dadurch gekennzeichnet,**
**dass** der Wellenzapfen (51) der Antriebswelle (29) als Kupplungsstelle in der Art eines Hohlzapfens ausgebildet ist;
**dass** der Wellenzapfen (51) eine obere Durchlassöffnung (61) als Ausgang aus dem Innenraum der Antriebswelle (29) und seitliche, fensterartige Wanddurchbrüche (63) für die Fluidverbindung zum Innenraum des Aufsatzes (53) und damit zu einer Spülleitung (55) aufweist; und
**dass** im Wellenzapfen (51) ein Kupplungsschlitz (65) gebildet ist, in den ein Mitnehmer (67) der Ausgangswelle (69) eines elektrischen Getriebemotors (71) eingreift, der auf der Oberseite des Aufsatzes (53) angeordnet ist.

2. Filtervorrichtung nach Anspruch 1, **dadurch gekennzeichnet, dass** die eingesetzten Rückspüleinrichtungen (25, 27) diametral einander gegenüberliegend zur Drehachse der Antriebswelle (29) angeordnet sind.

3. Filtervorrichtung nach Anspruch 1 oder 2, **dadurch gekennzeichnet, dass** mehr als zwei Rückspülorgane (31) eingesetzt sind, die in Gruppen unterteilt der jeweils einen (25) und der weiteren Rückspüleinrichtung (27) zugeordnet sind.

4. Filtervorrichtung nach Anspruch 3, **dadurch gekennzeichnet, dass** eine Gruppe von mindestens zwei Rückspülorganen (31) in vertikaler Übereinanderanordnung parallel zur Drehachse der Antriebswelle (29) eine Rückspüleinrichtung (25, 27) bilden.

5. Filtervorrichtung nach einem der vorstehenden Ansprüche, **dadurch gekennzeichnet, dass** die Antriebswelle (29) entlang ihrer Drehachse in zwei Kammern (73, 75) unterteilt ist und dass die Rückspülorgane (31) der einen Rückspüleinrichtung (25) in die eine Kammer (73) und die Rückspülorgane (31) der anderen Rückspüleinrichtung (27) in die andere Kammer (75) münden.

6. Filtervorrichtung nach einem der vorstehenden Ansprüche, **dadurch gekennzeichnet, dass** die Antriebswelle (29) auf ihren einander gegenüberliegenden Endseiten Durchlassöffnungen (41, 61) für die Abfuhr von Rückspülfluid der einen (25) bzw. der anderen Rückspüleinrichtung (27) aufweist.

7. Filtervorrichtung nach einem der vorstehenden Ansprüche, **dadurch gekennzeichnet, dass** zwei vertikal übereinanderliegende Filtereinsätze (15, 17) vorgesehen sind, die jeder zwei Rückspüleinrichtungen (25, 27) aufweist, und dass bei beiden Filtereinsätzen (15, 17) die Rückspülorgane (31) der einen Rückspüleinrichtung (25) in eine Kammer (73) und die Rückspülorgane (31) der anderen Rückspüleinrichtung (27) in eine andere Kammer (75) münden.

8. Filtervorrichtung nach Anspruch 7, **dadurch gekennzeichnet, dass** bei zwei übereinanderliegenden Filtereinsätzen (15, 17) die Antriebswelle (29) quer zur Drehachse in zwei weitere Kammern (85, 87) unterteilt ist und dass bei jedem Filtereinsatz (15, 17) die Rückspülorgane (31) der einen Rückspüleinrichtung (25) über je eine zugehörige Kammer (75 bzw. 85) mit der einen Durchlassöffnung (41) und die Rückspülorgane (31) der anderen Rückspüleinrichtung (27) über je eine weitere Kammer (77 bzw. 87) mit der anderen Durchlassöffnung (61) in Verbindung sind.

9. Filtervorrichtung nach einem der Ansprüche 6 bis 8, **dadurch gekennzeichnet, dass** die Abfuhr von Rückspülfluid über die Durchlassöffnungen (41, 61) der Antriebswelle (29) mittels Spülventilen (45, 57) ansteuerbar ist.

10. Filtervorrichtung nach einem der vorstehenden Ansprüche, **dadurch gekennzeichnet, dass** die Rückspülorgane (31) abstandsfrei auf der Innenseite des jeweils zuordenbaren Filtereinsatzes (15, 17) entlang derselben geführt sind.

11. Verfahren unter Verwendung einer Filtervorrichtung nach einem der vorstehenden Ansprüche, **dadurch gekennzeichnet, dass**
- im Normalbetrieb nur eine Rückspüleinrichtung (25 oder 27) eingesetzt ist und
- für eine Sonderrückspülung alle Rückspüleinrichtungen (25 und 27) zum Einsatz kommen.

## Claims

1. Filter device, having a filter housing (1) with a fluid inlet (8) for unfiltered medium and with a fluid outlet (9) for filtrate and having at least one one-piece or multi-part filter cartridge (15, 17) accommodated in the filter housing (1), which filter cartridge can be cleaned in counter-current flow to the filter direction with a backflushing device (25) with at least one backflushing element (31), which backflushing device can be moved along the inner side of the respective filter cartridge (15, 17) by means of a fluid-conducting drive shaft (29) of a rotary drive (69, 71), wherein the respective backflushing element (31) has, at its end adjacent to this inner side, at least one slit-shaped opening which extends parallel to the axis of rotation of the drive shaft (29) and which opens into a flow chamber connected to the drive shaft (29) in a fluid-conducting manner, wherein at least one further backflushing device (27) with at least one further backflushing element (31) is provided, wherein the fluid-conducting drive shaft (29) is divided into chambers (73, 75) separated from each other, and wherein the respective one backflushing element (31) of the one backflushing device (25) is connected to one of the chambers (73, 75) and the respective other backflushing element (31) of the other backflushing device (27) is connected to another chamber (73, 75),
wherein the drive shaft (29) has on its upper end side a coupling point (51, 65) for the engagement of a drive motor (71),
wherein the upper end of the drive shaft (29) is supported in a pivot bearing (49) located on the cover part (13), and
wherein the drive shaft (29) extends with a shaft journal (51) through the pivot bearing (49) into an attachment (53) located on the cover part (13),
**characterised in that**
the shaft journal (51) of the drive shaft (29) is configured as a coupling point in the manner of a hollow pin;
**in that** the shaft journal (51) comprises an upper passage opening (61) as an exit from the interior of the drive shaft (29) and lateral, window-like wall openings (63) for the fluid connection to the interior of the attachment (53) and thus to a flushing line (55); and
**in that** a coupling slot (65) is formed in the shaft journal (51), in which slot a driver (67) of the output shaft (69) of an electric geared motor (71) engages, which motor is arranged on the upper side of the attachment (53).

2. Filter device according to claim 1, **characterised in that** the backflushing devices (25, 27) used are arranged diametrically opposite each other with respect to the axis of rotation of the drive shaft (29).

3. Filter device according to claim 1 or 2, **characterised in that** more than two backflushing elements (31) are used, which are divided into groups associated with the one (25) and the other backflushing device (27), respectively.

4. Filter device according to claim 3, **characterised in that** a group of at least two backflushing elements (31), in vertical arrangement one above the other and parallel to the axis of rotation of the drive shaft (29), form a backflushing device (25, 27).

5. Filter device according to one of the preceding claims, **characterised in that** the drive shaft (29) is divided into two chambers (73, 75) along its axis of rotation and **in that** the backflushing elements (31) of the one backflushing device (25) open into the one chamber (73) and the backflushing elements (31) of the other backflushing device (27) open into the other chamber (75).

6. Filter device according to one of the preceding claims, **characterised in that** the drive shaft (29) has passage openings (41, 61) on its opposing end sides for the discharge of backflush fluid of the one (25) or the other backflushing device (27), respectively.

7. Filter device according to one of the preceding claims, **characterised in that** two filter cartridges (15, 17) located vertically one above the other are provided, each of which has two backflushing devices (25, 27), and **in that**, in both filter cartridges (15, 17), the backflushing elements (31) of the one backflushing device (25) open into one chamber (73) and the backflushing elements (31) of the other backflushing device (27) open into another chamber (75).

8. Filter device according to claim 7, **characterised in that**, in the case of two filter cartridges (15, 17) located one above the other, the drive shaft (29) is divided into two further chambers (85, 87) transverse to the axis of rotation and **in that**, in the case of each filter cartridge (15, 17), the backflushing elements (31) of the one backflushing device (25) are each in communication via one associated chamber (75 and 85, respectively) with the one passage opening (41) and the backflushing elements (31) of the other backflushing device (27) are each in communication via a further chamber (77 and 87, respectively) with the other passage opening (61).

9. Filter device according to one of claims 6 to 8, **characterised in that** the discharge of backflush fluid via the passage openings (41, 61) of the drive shaft (29) can be controlled by means of flushing valves (45, 57).

10. Filter device according to one of the preceding claims, **characterised in that** the backflushing elements (31) are guided along the inner side of the respectively assignable filter cartridge (15, 17) without spacing.

11. Method using a filter device according to one of the preceding claims, **characterised in that**
- only one backflushing device (25 or 27) is used in normal operation and
- all backflushing devices (25 and 27) come into use for special backflushing.

## Revendications

1. Installation de filtration comprenant une enveloppe (1) de filtre ayant une entrée (8) de filtre pour du non filtrat et ayant une sortie (9) de fluide pour du filtrat et comprenant au moins un insert (15, 17) de filtre en une partie ou en plusieurs parties, qui est logé dans l'enveloppe (1) de filtre et qui peut être nettoyé à contre courant de la direction de filtration par au moins un dispositif (25) de lavage en retour ayant au moins un organe (31) de lavage en retour, dispositif, qui peut, au moyen d'un arbre (29) d'entraînement, conduisant du fluide, d'un entraînement (69, 71) en rotation, être déplacé le long de la face intérieure de l'insert (15, 17) de filtre respectif, dans laquelle l'organe (31) respectif de lavage en retour a, à son extrémité voisine de cette face intérieure, au moins une ouverture de passage en forme de fente, qui s'étend parallèlement à l'axe de rotation de l'arbre (29) d'entraînement et qui débouche dans un espace d'écoulement communiquant fluidiquement avec l'arbre (29) d'entraînement, dans laquelle il y a au moins un autre dispositif (27) de lavage en retour ayant au moins un autre organe (31) de lavage en retour, dans laquelle l'arbre (29) d'entraînement, conduisant du fluide, est subdivisé en des chambres (73, 75) séparées les unes des autres et dans laquelle le respectivement un organe (31) de lavage en retour du un dispositif (25) de lavage en retour est raccordé à l'une des chambres (73, 75) et le respectivement autre organe (31) de lavage en retour de l'autre dispositif (27) de lavage en retour est raccordé à une autre chambre (73, 75),
dans laquelle l'arbre (29) d'entraînement a, sur son côté d'extrémité supérieur, un point (51, 65) d'accouplement pour l'attaque d'un moteur (71) d'entraînement,
dans laquelle l'extrémité supérieure de l'arbre (29) d'entraînement est montée dans un coussinet (49) de pivotement et se trouvant sur une partie (13) de couvercle, et
dans laquelle l'arbre (29) d'entraînement s'étend par un tourillon (51) d'arbre passant à travers le coussinet (49) de pivotement dans une coiffe (53) se trouvant sur la partie (13) de couvercle,
**caractérisée**
**en ce que** le tourillon (51) de l'arbre (29) d'entraînement est constitué en point d'accouplement à la manière d'un tourillon creux ;
**en ce que** le tourillon (51) d'arbre a une ouverture (61) supérieure de passage, comme sortie de l'espace intérieur de l'arbre (29) d'entraînement, et des traversées (63) de paroi latérale de type en fenêtre, pour la communication fluidique avec l'espace intérieur de la coiffe (53), et ainsi avec un conduit (55) de lavage ; et
**en ce que**, dans le tourillon (51) d'arbre est formée une fente (65) d'accouplement, dans laquelle pénètre un entraîneur (67) de l'arbre (69) de sortie d'un moteur (71) à engrenage, qui est disposé sur le côté supérieur de la coiffe (53).

2. Installation de filtration suivant la revendication 1, **caractérisée en ce que** les dispositifs (25, 27) de lavage en retour insérés sont disposés en étant opposés diamétralement par rapport à l'axe de rotation de l'arbre (29) d'entraînement.

3. Installation de filtration suivant la revendication 1 ou 2, **caractérisée en ce que** sont insérés plus de deux organes (31) de lavage en retour, qui, subdivisés en groupes, sont associés à respectivement l'un (25) et l'autre (27) dispositif de lavage en retour.

4. Installation de filtration suivant la revendication 3, **caractérisée en ce qu'**un groupe d'au moins deux organes (31) de lavage en retour forment, en un agencement de superposition verticale parallèlement à l'axe de l'arbre (29) d'entraînement, un dispositif (25, 27) de lavage en retour.

5. Installation de filtration suivant l'une des revendications précédentes, **caractérisée en ce que** l'arbre (29) d'entraînement est subdivisé le long de son axe de rotation en deux chambres (73, 75), et **en ce que** les organes (31) de lavage en retour du un dispositif (25) de lavage en retour débouchent dans la une chambre (73) et les organes (31) de lavage en retour de l'autre dispositif (27) de lavage en retour débouchent dans l'autre chambre (75).

6. Installation de filtration suivant l'une des revendications précédentes, **caractérisée en ce que** l'arbre (29) d'entraînement a, sur ses côtés d'extrémité opposés l'un à l'autre, des ouvertures (41, 61) de passage pour l'évacuation du fluide de lavage en retour de l'un (25) ou de l'autre dispositif (27) de lavage en retour.

7. Installation de filtration suivant l'une des revendications précédentes, **caractérisée en ce qu'**il est prévu deux inserts (15, 17) de filtre superposés verticalement, qui ont chacun deux dispositifs (25, 27) de lavage en retour, et **en ce que**, pour les deux inserts (15, 17) de filtre, les organes (31) de lavage en retour du un dispositif (25) de lavage en retour débouchent dans une chambre (73) et les organes (31) de lavage en retour de l'autre dispositif (27) de lavage en retour débouchent dans une autre chambre (75).

8. Installation de filtration suivant la revendication 7, **caractérisée en ce que**, pour deux inserts (15, 17) de filtre superposés, l'arbre (29) d'entraînement est subdivisé transversalement à l'axe de rotation en deux autres chambres (85, 87) et **en ce que**, pour chaque insert (15, 17) de filtre, les organes (31) de lavage en retour du un dispositif (25) de lavage en retour sont en liaison par respectivement une chambre (75 et 85) associée avec la une ouverture (41) de passage et les organes (31) de lavage en retour de l'autre dispositif (27) de lavage en retour sont en liaison par respectivement une autre chambre (77 et 87) avec l'autre ouverture (61) de passage.

9. Installation de filtration suivant l'une des revendications 6 à 8, **caractérisée en ce que** l'évacuation du fluide de lavage en retour, par les ouvertures (41, 61) de passage de l'arbre (29) d'entraînement, peut être commandée au moyen de soupapes (45, 57) de lavage.

10. Installation de filtration suivant l'une des revendications précédentes, **caractérisée en ce que** les organes (31) de lavage en retour sont guidés, sans mise à distance de la face intérieure de l'insert (15, 17) de filtre pouvant être associé, respectivement le long de celui-ci.

11. Procédé en utilisant une installation de filtration suivant l'une des revendications précédentes, **caractérisée en ce que**,
- en fonctionnement normal, seul un dispositif (25 ou 27) de lavage en retour est utilisé et
- pour un lavage en retour particulier, on met en œuvre tous les dispositifs (25 et 27) de lavage en retour.
